# EUROPÄISCHE PATENTSCHRIFT

(11) **EP 3 526 949 B1**
(45) Veröffentlichungstag und Bekanntmachung des Hinweises auf die Patenterteilung: **16.06.2021**
(21) Anmeldenummer: 17791951.1
(22) Anmeldetag: 09.10.2017
(51) Int. Cl.: H04L 29/06, H04L 29/08, H04W 12/08, H04W 12/04

(54) **VERFAHREN UND EINRICHTUNGEN ZUM BEREITSTELLEN VON MINDESTENS EINEM DIENST, INSBESONDERE IM AUTOMOTIVE-UMFELD**
METHOD AND DEVICES FOR PROVIDING AT LEAST ONE SERVICE, IN PARTICULAR IN THE AUTOMOTIVE FIELD
PROCÉDÉ ET DISPOSITIF DE FOURNITURE D'AU MOINS UN SERVICE, EN PARTICULIER DANS UN ENVIRONNEMENT AUTOMOBILE

(30) Priorität: 29.11.2016 DE 102016223633
(43) Veröffentlichungstag der Anmeldung: 21.08.2019
(73) Patentinhaber: Siemens Aktiengesellschaft, 80333 München (DE)
(72) Erfinder: FALK, Rainer, 85586 Poing (DE); FRIES, Steffen, 85598 Baldham (DE)
(86) Internationale Anmeldenummer: PCT/EP2017/075587
(87) Internationale Veröffentlichungsnummer: WO 2018/099639

(56) Entgegenhaltungen:
- WO-A2-2006/078430
- CN-A- 105 101 059

## Beschreibung

Die vorliegende Erfindung betrifft ein Verfahren und Einrichtungen zum Bereitstellen von mindestens einem Dienst innerhalb einer Netzwerkanordnung, insbesondere im Automotive-Umfeld sowie ein zugehöriges Computerprogramm(-produkt).

### Hintergrund der Erfindung

In bestimmten Szenarien beispielsweise im Automotive oder auch im Industrie 4.0-Umfeld kann es sinnvoll sein, Kommunikationsverbindungen sicher zueinander in Beziehung zu setzen. Demnach kann eine zweite Kommunikationsverbindung nur dann erlaubt bzw. aufgebaut werden, wenn schon eine erste Kommunikationsverbindung zwischen zwei Kommunikationspartnern besteht bzw. aufgebaut worden ist.

Im Automotivbereich können beispielsweise digitale Dienste bzw. Zusatzdienste, auch Value Added Services (VAS) genannt, an Zapf- bzw. Ladesäulen angeboten werden, wenn der Nutzer mit der Zapf- bzw. Ladesäule schon in eine erste Kommunikationsbeziehung bzw. -verbindung zur Kraftstoff- bzw. Energieaufnahme getreten ist.

Im Industrie 4.0 Umfeld ist - ähnlich wie am PC ein sogenanntes Plug and Play beim Anschluss neuer Hardware durch Laden des passenden Treibers - das sogenannte Plug and Work von Komponenten in einer technische Anlage von grundlegender Bedeutung. In diesem Kontext kann eine an eine erste Kommunikationsverbindung gebundene zweite Kommunikationsverbindung genutzt werden.

Dabei ist es vor allem im Automotivbereich und auch im Industrie 4.0 Umfeld immer wichtiger, die flexible Wahl von Kommunikationsprotokollen zu unterstützen. Zudem muss die oben genannte zweite Kommunikationsverbindung abgesichert sein, welche an die bestehende erste Kommunikationsverbindung manipulationsgeschützt gebunden ist.

Es ist möglich, dass innerhalb von Netzwerken Dienste über Netzwerkdienstserver für Nutzer angeboten werden.

Aus DE 10 2007 030 775 B3 ist ein Verfahren zum Filtern von Netzwerkdiensten und Netzwerkdiensteinhalten in einer Netzwerkanordnung, um z. B. für verschiedene Benutzergruppen Zugriffsbeschränkungen auf Webseiten zu realisieren, bekannt. 11

Aus WO 2006/078430 A2 ist ein Verfahren zur Herstellung einer gesicherten WLAN Verbindung bekannt, in der das WLAN Passwort über eine SSL-Verbindung übertragen wird.

Solche Dienste spielen vor allen in der Telekommunikation bzw. im Internet eine wichtige Rolle.

Es sind folgende Technologien bekannt:
- Der Standard IEEE 802.1x stellt eine Methode für die Authentifizierung und Autorisierung in IEEE 802-Netzen zur Verfügung. Durch die Möglichkeit der Nutzung eines Authentifizierungsservers (z.B. eines sog. RADIUS-Server oder DIAMETER-Server) kann in diesem Kontext auch lokal unbekannten Nutzern der Netzzugang ermöglicht werden. IEEE 802.1x basierte Lösungen, bei denen ein Client auf Layer 2 (Ebene 2 bzw. Schicht 2) des verwendeten Kommunikationsprotokollebene (z.B. OSI-Modell oder TCP/IP-Protokollstack eine Authentifizierung gegenüber einer Infrastrukturkomponente (typischerweise ein RADIUS Server) realisiert wird, die nach erfolgreicher Authentisierung den Zugang an einem Netzwerkzugangspunkt für den Nutzer freischaltet (siehe Wikipedia): https://de.wikipedia.org/wiki/IEEE 802.1X
- PANA (Protocol for Carrying Authentication for Network Access) ist ein IP-basiertes Protocol (Layer 3), das eine Authentifizierung des Nutzers für einen Netzwerkzugang ermöglicht. (siehe auch https://en.wikipedia.org/wiki/Protocol for Carrying Auth entication for Network Access)
- SOCKS ist ein Internet-Protokoll, das Client-Server-Anwendungen erlaubt, protokollunabhängig und transparent die Dienste eines Proxyservers zu nutzen. (siehe https://de.wikipedia.org/wiki/SOCKS. SOCKS selbst sieht dabei keinen eigenen Schutz für die Kommunikationsverbindung vor und kann aber durch existierende Protokolle wie TLS (Transport Layer Security, siehe IETF RFC 5246 https://tools.ietf.org/html/rfc5246)abgesichert werden.
- Weiterhin ist aus IETF RFC 5246 bekannt, TLS-Session Resumption durchzuführen, wobei zum einen eine Session in der geschlossenen Sitzung (Session) bis zu einer bestimmten Zeit nach dem Schließen wieder aufgenommen werden kann. Zum anderen kann damit eine weitere TLS-Session zwischen den Kommunikationspartnern vervielfacht werden. Bei dieser Vervielfachung wird eine Bindung an die originäre (ursprüngliche) Sitzung realisiert.
- Aus RFC 5929 (siehe https://tools.ietf.org/html/rfc5929)
- ist ein Kanalbindung (Channel Binding) von TLS-Kanälen bekannt. Hierbei erfolgt eine kryptographische Bindung eines existierenden TLS-Kanals an einen weiteren Kanal. Diese Kanalbindung ist spezifisch für jede Verbindung unabhängig davon, ob oben genannte Session resumption benutzt wird. TLS Implementierungen, welche den tlsunique Wert als Kanalbindungstyp unterstützen, müssen eine Schnittstelle zum Applikationsprogramm bereitstellen, welches eine Kanalbindung für eine TLS Verbindung erhält.

Der ISO-Standard 15118 definiert die Ladekontrollkommunikation zwischen Ladestation und Ladesteuergerät, z.B. - wie eingangs erwähnt - eines Ladesteuergeräts eines Elektroautos bzw. Elektrofahrzeugs. Die Kommunikation betreffend setzt ISO 15118 in der Edition 1 auf Powerline Communication (PLC) und einen TCP/IP-Protokollstack mit dem IP- und dem TCP-Protokoll (verbindungsorientiert). In anderen Anwendungsfällen werden Daten alternativ mit dem User Datagram Protocol (UDP) (verbindungslos) ausgetauscht. In der Anwendungsschicht sind das Domain Name System (DNS) für die Namenserfassung, das Transport Layer Security (TLS) für die Verschlüsselung und Integrität der Daten auf der Transportschicht (Schicht 4), das Vehicle to Grid Transport Protocol (V2GTP) und ein Modul für das Smart Charging auf den Protokollstack aufgesetzt. Beim TLS-Protokoll muss sich die Ladesäule gegenüber dem Fahrzeug als vertrauenswürdige Instanz ausweisen. Danach wird zwischen den Kommunikationspartnern ein Schlüssel ausgehandelt, über den eine gesicherte Kommunikation möglich ist. (siehe http://www.itwissen.info/definition/lexikon/ISO-15118-ISO-15118.html)

Eine Verwendung der oben erwähnten Technologien aus RFC 5246 und RFC 5929 sind als Erweiterung des oben genannten ISO-Standards 15118 möglich, um sie für eine drahtlose Ladekommunikation zu nutzen. Die drahtlose Ladekommunikation ist Teil der 2. Edition der ISO 15118 und adressiert konsequenterweise Anwendungsfälle, in denen auch induktiv geladen wird.

Beide RFC-Ansätze haben den Nachteil, dass zum Schutz der drahtlosen Kommunikationsverbindung zwischen Ladesteuerungsgerät und Ladesäule die Kommunikation zum Anbieter von Zusatzdiensten (VAS = Value added services) separat geschützt und damit ein Einkapselungsprotokoll realisiert werden muss. Diese Einkapselung ermöglicht die Absicherung der Kommunikation gegen ein Hijacken (unfreiwillig Übernahme) durch Dritte.

Es ist Aufgabe der Erfindung, Sicherheits- bzw. Schutzmaßnahmen im oben genannten Kontext zu verbessern.

### Darstellung der Erfindung

Diese Aufgabe wird durch die unabhängigen Patentansprüche gelöst. Vorteilhafte Weiterbildungen sind Gegenstand der abhängigen Ansprüche.

Die Erfindung beansprucht ein Verfahren zum Bereitstellen von mindestens einem Dienst innerhalb einer Netzwerkanordnung mit:
- einer oder mehreren Erfassungseinrichtungen und mit
- einer oder mehreren Netzwerkzugangseinrichtungen, an welche jeweils eine oder mehrere (der genannten) Erfassungseinrichtungen koppelbar sind;

Aufweisend folgende Schritte:
- Bereitstellen einer Sicherheitsassoziation mit kryptographischer Sicherung auf oder oberhalb der Transportebene der in der Netzwerkanordnung anwendbaren Kommunikationsprotokollebenen für zumindest eine erste bestehende Kommunikationsverbindung zwischen einer der Erfassungseinrichtungen und einer der Netzwerkzugangseinrichtungen, die zur Überwachung von durch die Erfassungseinrichtung erfassten Daten und/oder Steuerung einer weiteren Einrichtung innerhalb der Netzwerkanordnung anhand der durch die Erfassungseinrichtung erfassten Daten benutzt wird,
- Erzeugen und/oder Festlegen von Netzwerkzugangskonfigurationsdaten für zumindest eine weitere zweite, unterhalb der Transportebene kryptographisch zu sichernden Kommunikationsverbindung zwischen der Erfassungseinrichtung und der Netzwerkzugangseinrichtung,
- Bereitstellen der erzeugten und/oder festgelegten Netzwerkzugangskonfigurationsdaten an der Netzzugangseinrichtung unter Nutzung der für die erste Kommunikationsverbindung bereitgestellten kryptographischen Sicherheit,
- Einrichten wenigstens eines für die zumindest eine weitere zweite Kommunikationsverbindung bestimmten Netzwerkzugangs in der Netzwerkzugangseinrichtung mit Hilfe dieser bereitgestellten Netzwerkzugangskonfigurationsdaten,
- Aufbau der genannten zumindest einen weiteren zweiten Kommunikationsverbindung zwischen der Erfassungseinrichtung und dem einrichteten weiteren Netzwerkzugang in der Netzwerkzugangseinrichtung mit Hilfe der erzeugten und/oder festgelegten Netzwerkzugangskonfigurationsdaten, wobei über diese zumindest weitere zweite Kommunikationsverbindung der Erfassungseinrichtung ein oder mehrere Dienste bereitgestellt werden oder bereitstellbar sind.

Dabei wird in der einen oder mehreren ersten Kommunikationsverbindung(en) das Plug and Work zwischen den Kommunikationspartnern ausgehandelt. Eine oder mehrere zweite Kommunikationsverbindung(en) kann für eine Echtzeit-Steuerungskommunikation verwendet werden.

Eine Kommunikationsverbindung kann auch ein Kommunikationskanal sein oder auch mit gebündelten Kanälen etabliert sein. Auf Kommunikationsverbindungen werden Kommunikationsprotokollebenen angewandt, wobei auf oder oberhalb der Ebene 4 (Transportebene/-schicht/-layer) zumindest eine virtuelle bzw. logische Übertragungsverbindung (bzw. -kanal) für Daten insbesondere in Form von Datenpaketen zwischen zwei oder mehreren Kommunikationspartnern zur Verfügung gestellt wird. Bekannte Modelle für Kommunikationsprotokollebenen sind das OSI-Model und der TCP/IP-Protokollstapel. Auf Ebene 3 wird normalerweise TCP (verbindungsorientiert) oder UDP (verbindungslos) oder ähnliches verwendet.

Eine Weiterbildung der Erfindung sieht vor, dass die genannte kryptographische Sicherung für die erste Kommunikationsverbindung durch eine sogenannte TLS-Verschlüsselung oder DTLS-Verschlüsselung realisiert wird.

Die zweite Kommunikationsverbindung kann an die erste Kommunikationsverbindung gebunden (Channelbinding) sein bzw. davon abhängig sein.

Eine Weiterbildung der Erfindung sieht vor, dass die zweite Kommunikationsverbindung beendet wird, wenn die erste Kommunikationsverbindung ggf. durch de Netzzugangseinrichtung oder ggf. durch die Erfassungseinrichtung beendet wird. Dabei können die Netzwerkzugangskonfigurationsdaten gelöscht werden.

Eine Weiterbildung der Erfindung sieht vor, dass die erzeugten und/oder festgelegten Netzwerkzugangskonfigurationsdaten einen öffentlichen oder versteckten Netzwerknamen und/oder einen Zugangsschlüssel umfassen.

Eine Weiterbildung der Erfindung sieht vor, dass der weitere eingerichtete Netzwerkzugang zeitlich begrenzt ist und nach dem Zeitpunkt nicht mehr zur Verfügung steht, in dem die erste Kommunikationsverbindung beendet wird.

Die Erfindung sieht vor, dass die erzeugten und/oder festgelegten Netzwerkzugangskonfigurationsdaten dadurch bereitgestellt werden, dass sie aus dem Kontext der genannten ersten kryptographisch gesicherten Kommunikationsverbindung abgeleitet werden.

Eine Weiterbildung der Erfindung sieht vor, dass die erzeugten und/oder festgelegten Netzwerkzugangskonfigurationsdaten einen öffentlichen oder versteckten Netzwerknamen und/oder einen Zugangsschlüssel umfassen.

Eine Weiterbildung der Erfindung sieht vor, dass der weitere eingerichtete Netzwerkzugang zeitlich begrenzt ist und nach dem Zeitpunkt nicht mehr zur Verfügung steht, in dem die erste Kommunikationsverbindung beendet wird.

Eine Weiterbildung der Erfindung sieht vor, dass der eine oder die mehreren Netzzugangseinrichtungen eine Kommunikationsverbindung von der Netzwerkzugangseinrichtung zu einem Netzwerkdienstserver zulassen, damit von dem Netzwerkdienstserver einer oder mehrere der genannten Dienste bereitgestellt werden.

Eine Weiterbildung der Erfindung sieht vor, dass für diese Kommunikationsverbindung zum Netzwerkdienstserver der Port in der Netzzugangseinrichtung freigeschaltet wird, der für die zweite Kommunikationsverbindung zur Erfassungseinrichtung verwendet wird. Dafür kann das eingangs genannte SOCKS-Protokolls bzw. dessen Erweiterung SOCKS5 verwendet werden.

Eine Weiterbildung der Erfindung sieht vor, dass der Port in Abhängigkeit von der ersten Kommunikationsverbindung freigeschaltet wird.

Eine Weiterbildung der Erfindung sieht vor, dass der freizuschaltende Port vorkonfiguriert ist oder dynamisch aus den genannten Netzwerkzugangskonfigurationsdaten ermittelt wird. Die Erfindung zeichnet sich durch folgende Vorteile aus: Der vorgeschlagene Ansatz ermöglicht eine differenziertere Freischaltung von Kommunikationsverbindungen zu Dienstanbietern über eine Netzwerkzugangseinrichtung, wobei keine Einschränkung des Applikationsprotokolls existiert, da der Schutz unterhalb Schicht 4 realisiert wird. Der vorgeschlagene Ansatz ermöglicht zudem eine Freischaltung von Kommunikationsverbindungen ohne zusätzliche Konfigurationsdatenkommunikation, da Erfassungseinrichtung und Netzwerkszugangseinrichtung alle Parameter lokal berechnen können. Über die Bindung an eine erste Kommunikationsverbindung kann zudem ein automatischer Abbau der zweiten Kommunikationsverbindung sichergestellt werden.

Ein weiterer Aspekt der Erfindung sieht eine Erfassungseinrichtung geeignet zum Empfang eines Dienstes innerhalb einer Netzwerkanordnung vor, aufweisend:
- Mittel zum Bereitstellen einer Sicherheitsassoziation mit kryptographischer Sicherung auf oder oberhalb der Transportebene der in der Netzwerkanordnung anwendbaren Kommunikationsprotokollebenen für zumindest eine erste bestehende Kommunikationsverbindung zwischen der Erfassungseinrichtung und einer in der Netzwerkanordnung angeordneten Netzwerkzugangseinrichtung, die zur Überwachung von durch die Erfassungseinrichtung erfassten Daten und/oder Steuerung einer weiteren Einrichtung innerhalb der Netzwerkanordnung anhand der durch die Erfassungseinrichtung erfassten Daten nutzbar ist,
- Mittel zum Erzeugen und/oder Festlegen von Netzwerkzugangskonfigurationsdaten für zumindest eine weitere zweite, unterhalb der Transportebene kryptographisch zu sichernden Kommunikationsverbindung zwischen der Erfassungseinrichtung und der Netzwerkzugangseinrichtung,
- Mittel zum Bereitstellen der erzeugten und/oder festgelegten Netzwerkzugangskonfigurationsdaten an der Netzzugangseinrichtung unter Nutzung der für die erste Kommunikationsverbindung bereitgestellten kryptographischen Sicherheit,
- Mittel zum Aufbau der zumindest weiteren zweiten Kommunikationsverbindung zwischen der Erfassungseinrichtung und einem einrichteten weiteren Netzwerkzugang in der Netzwerkzugangseinrichtung mit Hilfe der erzeugten und/oder festgelegten Netzwerkzugangskonfigurationsdaten, wobei über diese weitere zweite Kommunikationsverbindung der Erfassungseinrichtung ein oder mehrere Dienste bereitgestellt werden können.

Die Erfassungseinrichtung kann entsprechend der Ausführungsformen/Weiterbildungen zum oben genannten Verfahren aus- bzw. weitergebildet sein.

Ein weiterer Aspekt der Erfindung sieht eine Netzwerkzugangseinrichtung geeignet zum Bereitstellen eines Dienstes für eine Erfassungseinrichtung innerhalb einer Netzwerkanordnung vor, aufweisend:
- Mittel zur Verwendung von erzeugten und/oder festgelegten Netzwerkzugangskonfigurationsdaten für den Aufbau zumindest einer zweiten Kommunikationsverbindung, welche unter Nutzung der für zumindest eine erste Kommunikationsverbindung bereitgestellten Sicherheitsassoziation mit kryptographischer Sicherung auf oder oberhalb der Transportebene der in der Netzwerkanordnung anwendbaren Kommunikationsprotokollebenen bereitgestellt worden sind, wobei die zumindest erste Kommunikationsverbindung zur Überwachung von durch die Erfassungseinrichtung erfassten Daten und/oder Steuerung einer weiteren Einrichtung innerhalb der Netzwerkanordnung anhand der durch die Erfassungseinrichtung erfassten Daten nutzbar ist,
- Mittel zum Einrichten zumindest eines weiteren Netzwerkzugangs mit Hilfe dieser bereitgestellten Netzwerkzugangskonfigurationsdaten,
- Mittel zum Aufbau der zumindest weiteren zweiten Kommunikationsverbindung zwischen der Erfassungseinrichtung und dem einrichteten weiteren Netzwerkzugang mit Hilfe der bereitgestellten Netzwerkzugangskonfigurationsdaten, wobei über diese weitere zweite Kommunikationsverbindung der Erfassungseinrichtung ein oder mehrere Dienste bereitgestellt werden können.

Die Netzwerkzugangseinrichtung kann entsprechend der Ausführungsformen/Weiterbildungen zum oben genannten Verfahren aus- bzw. weitergebildet sein.

Ein weiterer Aspekt der Erfindung sieht eine Netzwerkanordnung mit mindestens einer Erfassungseinrichtung nach einer der oben genannten Ausführungsformen und mindestens einer Netzwerkzugangseinrichtung nach einer der oben genannten Ausführungsformen vor, an welche die Erfassungseinrichtungen koppelbar, wobei die Erfassungseinrichtung und Netzwerkzugangseinrichtung dazu ausgelegt sind, ein Verfahren nach einem der oben genannten Ausführungsformen durchzuführen.

Ein weiterer Aspekt der Erfindung ist ein Computerprogrammprodukt mit mindestens einem Computerprogramm, das Mittel zur Durchführung des Verfahrens nach einem der oben genannten Ausführungsformen aufweist, wenn das mindestens eine Computerprogramm verteilt innerhalb der vorstehend genannten Netzwerkanordnung zur Ausführung gebracht wird.

Das Computerprogramm(produkt) kann im Wesentlichen analog wie das Verfahren und dessen Ausgestaltungen bzw. Weiterbildungen entsprechend aus- bzw. weitergebildet werden.

### Ausführungsbeispiel(e) :

Weitere Vorteile, Einzelheiten und Weiterbildungen der Erfindung ergeben sich aus der nachfolgenden Beschreibung von Ausführungsbeispielen in Verbindung mit den Zeichnungen.

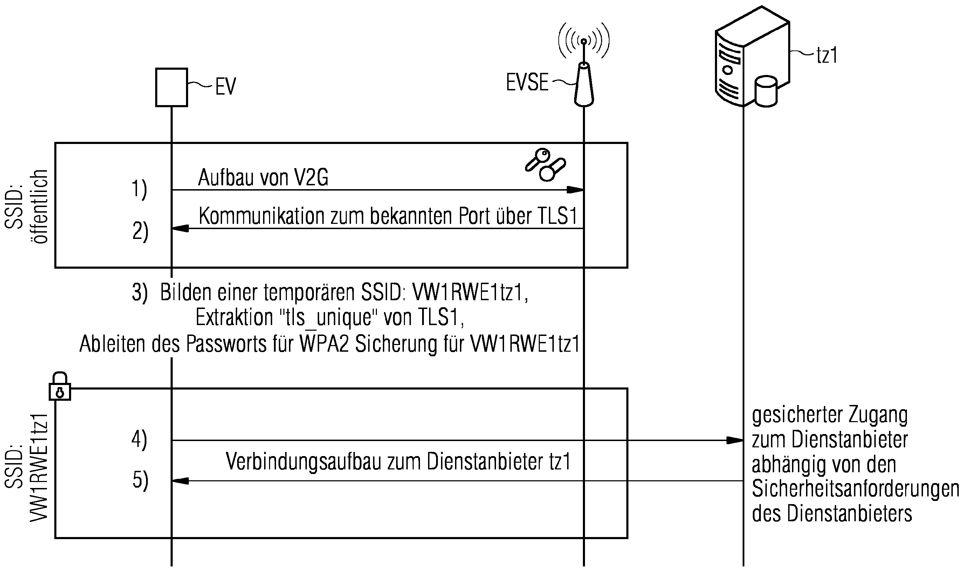

Dabei zeigt die Figur schematisch ein Ablaufdiagramm, welche Schritte bzw. Nachrichtenfluss zwischen der Erfassungseinrichtung und der Netzwerkzugangseinrichtung und ggf. dem Netzwerkdienstserver ausgeführt werden können.

In der Figur ist eine Erfassungseinrichtung EV von mehreren möglichen Erfassungseinrichtungen dargestellt, die als Ladesteuerungsgerät in einem Elektroauto ausgebildet sein kann. Die mindestens eine erste Kommunikationsverbindung kann zur Überwachung von durch die Erfassungseinrichtung erfassten Daten und/oder Steuerung einer weiteren Einrichtung innerhalb der Netzwerkanordnung anhand der durch die Erfassungseinrichtung erfassten Daten benutzt werden. Solch eine Erfassungseinrichtung erfasst in der Regel Messdaten z.B. den Ladezustand eines in das Elektroauto eingebauten Energiespeichers, wobei die Messdaten mittels eines Sensors erfasst werden können. Ein Aktor steuert in der Regel mittels physikalischer Aktuatoren das Laden des Energiespeichers. Des Weiteren ist eine Netzwerkzugangseinrichtung EVSE von ggf. mehreren Netzwerkzugangseinrichtungen vorgesehen, die in Kommunikationsverbindung zu einem (Netzwerkdienst-)Server tz1 eines Dienstanbieters stehen kann. Die Netzwerkzugangseinrichtung kann hierbei Teil einer Ladesäule sein.

Es ist auch denkbar, dass im Industrie 4.0 Umfeld die Erfassungseinrichtung in ein Gerät integriert ist, das nicht zur Steuerung eines Energieladeprozesses vorgesehen ist, sondern für ein sogenanntes Plug & Work eine Echtzeitkommunikation mit der Netzwerkzugangseinrichtung, die Konfigurationen zum "Work" für das Gerät bereitstellt, betreibt.

Von der zeitlichen Abfolge wird normalerweise zuerst eine erste Kommunikationsverbindung bzw. -kanal oder auch mehrere davon aufgebaut. Der in der Figur mit 1) gekennzeichnete Kommunikationskanal TLS1 von der Erfassungseinrichtung EV mit Namen "VW1" zum bekannten Port "RWE1" der Netzwerkzugangseinrichtung EVSE aufgebaut bzw. etabliert oder dieser besteht bereits. Als Teil des TLS-Verbindungsaufbaus authentisiert sich die Netzwerkzugangseinrichtung EVSE mittels eines Server-Zertifikats. In diesem Beispiel authentisiert sich die Erfassungseinrichtung EV indirekt über eine lokale Authentifizierung an der Netzwerkzugangseinrichtung EVSE durch den Nutzer. Im Kontext einer Vehicle-to-Grid (V2G)-Kommunikation kann nun die Erfassungseinrichtung EV eine Dienstbereitstellung oder Dienstermöglichung bei der Netzwerkzugangseinrichtung EVSE anfordern.

Basierend auf der ersten etablierten TLS-Verbindung können beide Seiten alle notwendigen Parameter für eine zweite Kommunikationsverbindung, beispielsweise ein temporäres WLAN bzw. eine temporäre WLAN- Verbindung (WLAN: Wireless Local Access Network) beispielsweise mit der SSID "VW1RWE1" ableiten. Die TLS-Verbindung kann auch eine DTLS-Verbindung (DTLS: Datagram TSL) sein, wenn anstatt TCP- ein UDP-Protokoll angewandt wird. Im mit 3) gekennzeichneten Schritt stellt nach Ableitung der Parameter die Netzwerkzugangseinrichtung EVSE die WLAN-Verbindung mit dieser SSID zur Verfügung. Der notwendige Netzwerkschlüssel wird durch die Ableitung vom Wert *tls_unique* bestimmt. Die Erfassungseinrichtung EV kann sich dann auf Basis der lokal bestimmten Anmeldedaten im WLAN mit der SSID "VW1RWE1" anmelden. Im mit 4) gekennzeichneten Schritt hängt der gesicherte Zugang zum (Netzwerkdienst-)Server tz1 des Dienstanbieters von der Sicherheits-Policy bzw. den Sicherheitsregeln des Dienstanbieters ab. Im mit 5) gekennzeichneten Schritt kann die Netzwerkzugangseinrichtung eine Kommunikation mit dem Server des Dienstanbieter tz1 aufbauen.

Zur Realisierung einer oder mehrerer weiterer zweiten, an eine erste Kommunikationsverbindung gebundene Kommunikationsverbindungen zu einen in der Netzwerkzugangseinrichtung eingerichteten Netzwerkzugangs bzw. WLAN-Zugangspunkt sind folgende Ausführungsformen möglich:
Eine erste Kommunikationsverbindung wird zwischen einer Erfassungseinrichtung wie z.B. EV und einer Netzwerkzugangseinrichtung wie z.B. EVSE vorzugsweise drahtlos aufgebaut. Diese Netzwerkzugangseinrichtung erbringt schon Dienste, wie z.B. einen Drahtlos-Ladedienst für einen durch die Erfassungseinrichtung steuerbaren Energiespeicher. Im Industrie 4.0 Umfeld ist eine erste Kommunikationsverbindung eine Art Netzwerkzugangskontrolle liefern. Dabei erfolgt eine Konfigurationsprüfung mit dem zu steuernden Gerät, ob aktuelle Softwareupdates installiert sind, der Virusscanner aktuell gehalten ist. Nur wenn die Konfiguration als gültig erkannt wird, wird eine WLAN-Konfiguration bereitgestellt (d.h. auf VAS kann nur über WLAN zugegriffen werden, wenn vorher die Konfiguration abgeprüft wurde). Es können auch weitere Parameter abgeprüft werden (z.B. ob dringende Diagnosedaten vorliegen), z.B. ob das Gerät manipuliert wurde (z.B. eine Motorsteuerung). In Abhängigkeit von der Prüfung kann eine Verbindung zu einer oder mehreren oben genannten, nicht in der Figur dargestellten dritten Einrichtung z.B. einer Reparaturstelle erfolgen, um z.B. ein manipuliertes Gerät zu melden.

Diese erste Kommunikationsverbindung kann vorzugsweise über das Sicherheitsprotokoll TLS "Transport Layer Security", d.h. auf Transportebene, aufgebaut werden.

Es erfolgt durch TLS zumindest eine unilaterale Authentifizierung des Servers gegenüber dem Client. Der Client, hier im Beispiel die Erfassungseinrichtung, authentifiziert sich gegenüber dem Server, hier im Beispiel die Netzwerkszugangseinrichtung, vorzugsweise durch eine der folgenden Möglichkeiten gegeben:
- Mittels Client-seitiger Authentifizierung in TLS (z.B. Client-Zertifikat oder sogenannten Pre-Shared Schlüssel mit TLSPSK)
- Mittels Applikationsprotokoll über die existierende TLS-Verbindung (z.B. HTTP Digest, JWT Security Token, XML-Security)
- Direkt durch Nutzer am Server über eine weitere Schnittstelle, d.h. unabhängig von der TLS-Verbindung (im vorliegenden Beispiel kann dies eine Freischaltung per RFID sein oder auch direkt eine Bezahlaktion, die den Client an den Server bindet).

Dadurch besteht eine hohe Flexibilität, eine Authentifizierung des Clients zu realisieren, oder ggf. auch auf eine Client-Authentifizierung zu verzichten. Dennoch soll sicher eine oder gegebenenfalls mehrere zweite Kommunikationsverbindung(en) aufgebaut werden, die eindeutig, manipulationsgeschützt dem gleichen Client zugeordnet werden kann. Die erste TLS-Kommunikationsverbindung wird dazu verwendet, um dem Client Netzwerkkonfigurationsdaten für einen geschützten Netzwerkzugang bereitzustellen (insbesondere eine Konfiguration für eine kryptographisch geschützte WLAN-Kommunikationsverbindung, die insbesondere Schlüsselmaterial und einen Netzwerknamen, z.B. eine SSID, als Identifizierungsinformation umfasst).

Diese Netzwerkkonfigurationsdaten für die zweite Kommunikationsverbindung sind spezifisch für diesen Client (d.h. es wird ein temporärer, für diesen Client individueller WLAN-Zugang) konfiguriert:
Aufbau einer TLS-Kommunikationsverbindung zwischen Client und Server (über einen ungeschützten, ersten Netzwerkzugang) (siehe auch 1) und 2) in der Figur);
- Erzeugen bzw. Bilden und/oder Bestimmen bzw. Festlegen von dynamischen Netzwerkzugangskonfigurationsdaten für einen geschützten Netzwerkzugang (Unterhalb Layer 3, vorzugsweise Layer 2: IEEE 802.11 WLAN, Ethernet MACsec, IPsec mit Layer2-Tunneling). Dabei kann zumindest ein Parameter (PSK-Key (Schlüssel), Netzwerkname (SSID)) zufällig bzw. pseudozufällig erzeugt werden (siehe auch 3) in der Figur);
- Konfigurieren/Einrichten eines zweiten temporären Netzwerkzugangs durch den Server entsprechend der erzeugten Netzwerkzugangskonfigurationsdaten.
- Bereitstellen der dynamischen Netzwerkzugangskonfigurationsdaten an den Client unter Nutzung der TLS-Verbindung (explizite Übertragung von Konfigurationsdaten über die TLS-Verbindung, oder Bestimmung der Netzzugangskonfigurationsdaten abhängig von der TLS-Verbindung) ;
- Aufbau eines zweiten, geschützten Netzwerkzugangs durch den Client entsprechend der dynamischen Netzwerkzugangskonfiguration (siehe 5) in der Figur).

Im Industrie 4.0-Umfeld kann die zweite Kommunikationsverbindung für eine Echtzeit-Steuerungskommunikation verwendet werden. Über die erste Verbindung läuft das Aushandeln bzgl. Plug-and-Work.

Vorzugsweise wird der zweite Netzwerkzugang durch den Server beendet (eingerichteter Netzwerkzugang deaktiviert, Netzwerckonfigurationsdaten gelöscht), wenn die zur Übertragung der Netzwerkzugangskonfigurationsdaten verwendete TLS-Verbindung beendet wird. Vorzugsweise wird die die zweite Kommunikationsverbindung durch den Client beendet, wenn die zum Einrichten verwendete TLS-Kommunikationsverbindung beendet wird. Vorzugsweise wird der eingerichtete Netzwerkzugang für die zweite Kommunikationsverbindung durch den Client gelöscht, wenn die zum Einrichten verwendete TLS-Kommunikationsverbindung beendet wird.

Der Aufbau dieser ersten Kommunikationsverbindung kann konkret zu einem festlegbaren bekannten Port des Servers über ein offenes WLAN (eigene SSID, SSID selbst ist öffentlich) erfolgen. Alternativ kann die Adresse des Servers bzw. des Ports auch über ein (Service) Discovery Protokoll (z.B. LLDP) ermittelt werden. Der Server ermöglicht in diesem WLAN keinen Verbindungsaufbau zu externen Servern von einem Dienstanbieter. Diese erste Kommunikationsverbindung wird insbesondere für die Übertragung von Steuerungskommunikation im Falle eines drahtlosen (induktiven) Ladevorgangs verwendet. Im Falle einer Netzwerkzugangskontroll-Verbindung - wie oben bereits erläutert - kann der Server nun automatisch oder auf Anfrage durch den Client eine temporäre SSID (WLAN-Netzwerkname) für ein zusätzliches WLAN erzeugen. Diese SSID kann ebenfalls öffentlich sein (d.h. über sogenannte WLAN-Beacons bekannt gemacht werden) oder aber versteckt sein (d.h. nur durch Probe-Requests überprüfbar).

Der Server teilt dem Client diese SSID über die erste Kommunikationsverbindung mit (z.B. über das TLS-Protokoll über die erste Kommunikationsverbindung). Die temporäre SSID kann auch nach einem definierten Muster aufgebaut sein, so dass der Client diese selbst bilden kann. Ein möglicher Ansatz ist: *Temporäre SSID = Dienstname* | *Client Identifier,* wobei der Client Identifier z.B. die MAC-Adresse sein kann. Der Dienstname kann ein bekannter Name sein und z.B. der SSID des öffentlichen WLAN entsprechen. Das zweite WLAN mit der temporären SSID ist zugangsgeschützt (WEP, WPA, WPA2 oder ähnliches). Die hierzu notwendigen Daten können dem Client direkt oder z.B. über eine separate Protokollnachricht über die erste (sichere) Kommunikationsverbindung mitgeteilt werden. Client und Server können die in der ersten Kommunikationsverbindung aufgebaute Sicherheitsassoziation dazu nutzen, um daraus die Zugangsdaten für die zweite Kommunikationsverbindung abzuleiten. Hierzu sind z.B. für TLS die bekannten Ableitungen aus RFC 5929 nutzbar, um mittels tls *unique -* Wertes eine kryptographische Bindung zur zweiten Kommunikationsverbindung aufzubauen. Client und Server leiten somit aus *"tls_unique"* das Zugangspasswort *"pw_temp_SSID"* für das WLAN mit der temporären SSID ab. Als Ableitungsfunktion kann z.B. eine Hash-Funktion wie SHA256 verwendet werden. *pw_temp_SSID* = *h(tls_unique* | *client identifier* | *dienstname).* In diese Ableitung können weitere Parameter einfließen (hier z.B. der Client Identifier und der Dienstname). Der Client kann sich nur mit dem WLAN mit der temporären SSID über WPA2 (oder ähnliches) sicher verbinden und geschützt über den Server mit dem Server des Dienstanbieters kommunizieren (die Ende-zu-Ende Kommunikation mit dem externen Dienstanbieter ist typischerweise separat gesichert). Der Server kann die Zahl der akzeptierten Verbindungen zu dem temporären WLAN einschränken.

Abhängig von der Server Security Policy (Sicherheitsanforderungen) wird die temporäre SSID gelöscht und alle Verbindungen abgebaut, sobald die erste Kommunikationsverbindung beendet wird. Alternativ kann diese bestehen bleiben, bis der Client sie explizit oder nach einer vorgegebenen Zeit abbaut.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen. Der Begriff "Prozessor", "zentrale Signalverarbeitung", "Steuereinheit" oder "Datenauswertemittel", wie hier verwendet, umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein.

## Patentansprüche

1. Verfahren zum Bereitstellen von mindestens einem Dienst innerhalb einer Netzwerkanordnung mit:
- einer oder mehreren Erfassungseinrichtungen (EV) und mit
- einer oder mehreren Netzwerkzugangseinrichtungen (EVSE), an welche jeweils eine oder mehrere Erfassungseinrichtungen (EV) koppelbar sind;
aufweisend folgende Schritte:
- Bereitstellen einer Sicherheitsassoziation mit kryptographischer Sicherung auf oder oberhalb der Transportebene der in der Netzwerkanordnung anwendbaren Kommunikationsprotokollebenen für zumindest eine erste bestehende Kommunikationsverbindung zwischen einer der Erfassungseinrichtungen (EV) und einer der Netzwerkzugangseinrichtungen (EVSE), wobei die erste Kommunikationsverbindung zur Überwachung von durch die Erfassungseinrichtung erfassten Daten und/oder Steuerung einer weiteren Einrichtung innerhalb der Netzwerkanordnung anhand der durch die Erfassungseinrichtung erfassten Daten benutzt wird (1)),
- Erzeugen und/oder Festlegen von Netzwerkzugangskonfigurationsdaten für zumindest eine weitere zweite, unterhalb der Transportebene kryptographisch zu sichernden Kommunikationsverbindung zwischen der Erfassungseinrichtung und der Netzwerkzugangseinrichtung,
- Bereitstellen der erzeugten und/oder festgelegten Netzwerkzugangskonfigurationsdaten an der Netzzugangseinrichtung unter Nutzung der für die erste Kommunikationsverbindung bereitgestellten Sicherheitsassoziation (3), wobei die erzeugten und/oder festgelegten Netzwerkzugangskonfigurationsdaten dadurch bereitgestellt werden, dass sie aus dem Kontext der genannten ersten kryptographisch gesicherten Kommunikationsverbindung abgeleitet werden,
- Einrichten wenigstens eines für die zumindest eine weitere zweite Kommunikationsverbindung bestimmten Netzwerkzugangs in der Netzwerkzugangseinrichtung mit Hilfe dieser bereitgestellten Netzwerkzugangskonfigurationsdaten,
- Aufbau der genannten zumindest einen weiteren zweiten Kommunikationsverbindung zwischen der Erfassungseinrichtung (EV) und dem einrichteten weiteren Netzwerkzugang in der Netzwerkzugangseinrichtung (EVSE) mit Hilfe der erzeugten und/oder festgelegten Netzwerkzugangskonfigurationsdaten, wobei über diese weitere zweite Kommunikationsverbindung der Erfassungseinrichtung ein oder mehrere Dienste bereitgestellt werden können (5).

2. Verfahren nach dem vorhergehenden Anspruch, **dadurch gekennzeichnet, dass** die genannte kryptographische Sicherung für die erste Kommunikationsverbindung durch eine sogenannte TLS-Verschlüsselung oder DTLS-Verschlüsselung realisiert wird.

3. Verfahren nach einem der vorhergehenden Ansprüche, **dadurch gekennzeichnet, dass** die zweite Kommunikationsverbindung an die erste Kommunikationsverbindung gebunden ist.

4. Verfahren nach einem der vorhergehenden Ansprüche, **dadurch gekennzeichnet, dass** die zweite Kommunikationsverbindung beendet wird, wenn die erste Kommunikationsverbindung beendet wird.

5. Verfahren nach einem der vorhergehenden Ansprüche, **dadurch gekennzeichnet, dass** die erzeugten und/oder festgelegten Netzwerkzugangskonfigurationsdaten einen öffentlichen oder versteckten Netzwerknamen und/oder einen Zugangsschlüssel umfassen.

6. Verfahren nach einem der vorhergehenden Ansprüche, **dadurch gekennzeichnet, dass** der weitere eingerichtete Netzwerkzugang zeitlich begrenzt ist und nach dem Zeitpunkt nicht mehr zur Verfügung steht, in dem die erste Kommunikationsverbindung beendet wird.

7. Verfahren nach einem der vorhergehenden Ansprüche, **dadurch gekennzeichnet, dass** der eine oder die mehreren Netzzugangseinrichtungen eine Kommunikationsverbindung von der Netzwerkzugangseinrichtung zu einem Netzwerkdienstserver (tz1) zulassen (4)), damit von dem Netzwerkdienstserver einer oder mehrere der genannten Dienste bereitgestellt werden.

8. Verfahren nach dem vorhergehenden Anspruch, **dadurch gekennzeichnet, dass** für diese Kommunikationsverbindung zum Netzwerkdienstserver der Port in der Netzzugangseinrichtung freigeschaltet wird, der für die zweite Kommunikationsverbindung zur Erfassungseinrichtung verwendet wird.

9. Verfahren nach dem vorhergehenden Anspruch, **dadurch gekennzeichnet, dass** der Port in Abhängigkeit von der ersten Kommunikationsverbindung freigeschaltet wird.

10. Verfahren nach dem vorhergehenden Anspruch 8 oder 9, **dadurch gekennzeichnet, dass** der freizuschaltende Port vorkonfiguriert ist oder dynamisch aus den genannten Netzwerkzugangskonfigurationsdaten ermittelt wird.

11. Erfassungseinrichtung (EV) geeignet zum Empfang eines Dienstes innerhalb einer Netzwerkanordnung, aufweisend:
- Mittel zum Bereitstellen einer Sicherheitsassoziation mit kryptographischer Sicherung auf oder oberhalb der Transportebene der in der Netzwerkanordnung anwendbaren Kommunikationsprotokollebenen für zumindest eine erste bestehende Kommunikationsverbindung zwischen der Erfassungseinrichtung (EV) und einer in der Netzwerkanordnung angeordneten Netzwerkzugangseinrichtung (EVSE), wobei die erste Kommunikationsverbindung zur Überwachung von durch die Erfassungseinrichtung erfassten Daten und/oder Steuerung einer weiteren Einrichtung innerhalb der Netzwerkanordnung anhand der durch die Erfassungseinrichtung erfassten Daten nutzbar ist,
- Mittel zum Erzeugen und/oder Festlegen von Netzwerkzugangskonfigurationsdaten für zumindest eine weitere zweite, unterhalb der Transportebene kryptographisch zu sichernden Kommunikationsverbindung zwischen der Erfassungseinrichtung und der Netzwerkzugangseinrichtung,
- Mittel zum Bereitstellen der erzeugten und/oder festgelegten Netzwerkzugangskonfigurationsdaten an der Netzzugangseinrichtung unter Nutzung der für die erste Kommunikationsverbindung bereitgestellten Sicherheitsassoziation, wobei die erzeugten und/oder festgelegten Netzwerkzugangskonfigurationsdaten dadurch bereitgestellt werden, dass sie aus dem Kontext der genannten ersten kryptographisch gesicherten Kommunikationsverbindung abgeleitet werden,
- Mittel zum Aufbau der zumindest weiteren zweiten Kommunikationsverbindung zwischen der Erfassungseinrichtung und einem einrichteten weiteren Netzwerkzugang in der Netzwerkzugangseinrichtung mit Hilfe der erzeugten und/oder festgelegten Netzwerkzugangskonfigurationsdaten, wobei über diese weitere zweite Kommunikationsverbindung der Erfassungseinrichtung ein oder mehrere Dienste bereitgestellt werden können.

12. Erfassungseinrichtung nach dem vorhergehenden Anspruch, **dadurch gekennzeichnet, dass** die genannte kryptographische Sicherung für die erste Kommunikationsverbindung durch eine sogenannte TLS-Verschlüsselung oder DTLS-Verschlüsselung realisierbar ist.

13. Netzwerkzugangseinrichtung (EVSE) geeignet zum Bereitstellen eines Dienstes für eine Erfassungseinrichtung (EV) innerhalb einer Netzwerkanordnung aufweisend:
- Mittel zur Verwendung von erzeugten und/oder festgelegten Netzwerkzugangskonfigurationsdaten für den Aufbau zumindest einer zweiten Kommunikationsverbindung, welche unter Nutzung der für zumindest eine erste Kommunikationsverbindung bereitgestellten Sicherheitsassoziation mit kryptographischer Sicherung auf oder oberhalb der Transportebene der in der Netzwerkanordnung anwendbaren Kommunikationsprotokollebenen bereitgestellt worden sind, wobei die zumindest erste Kommunikationsverbindung zur Überwachung von durch die Erfassungseinrichtung erfassten Daten und/oder Steuerung einer weiteren Einrichtung innerhalb der Netzwerkanordnung anhand der durch die Erfassungseinrichtung erfassten Daten nutzbar ist, wobei die erzeugten und/oder festgelegten Netzwerkzugangskonfigurationsdaten dadurch bereitgestellt worden sind, dass sie aus dem Kontext der genannten ersten kryptographisch gesicherten Kommunikationsverbindung abgeleitet worden sind,
- Mittel zum Einrichten zumindest eines weiteren Netzwerkzugangs mit Hilfe dieser bereitgestellten Netzwerkzugangskonfigurationsdaten,
- Mittel zum Aufbau der zumindest weiteren zweiten Kommunikationsverbindung zwischen der Erfassungseinrichtung und dem einrichteten weiteren Netzwerkzugang mit Hilfe der bereitgestellten Netzwerkzugangskonfigurationsdaten, wobei über diese weitere zweite Kommunikationsverbindung der Erfassungseinrichtung ein oder mehrere Dienste bereitgestellt werden können.

14. Netzwerkzugangseinrichtung nach dem vorhergehenden Anspruch, **dadurch gekennzeichnet, dass** der weitere eingerichtete Netzwerkzugang zeitlich begrenzt ist und nach dem Zeitpunkt nicht mehr zur Verfügung steht, in dem die erste Kommunikationsverbindung beendet ist.

15. Netzwerkzugangseinrichtung nach dem vorhergehenden Anspruch 13 oder 14, **dadurch gekennzeichnet, dass** diese eine Kommunikationsverbindung zu einem Netzwerkdienstserver zulässt, damit von dem Netzwerkdienstserver einer oder mehrere der genannten Dienste bereitgestellt werden können.

16. Netzwerkzugangseinrichtung nach dem vorhergehenden Anspruch, **dadurch gekennzeichnet, dass** für diese Kommunikationsverbindung zum Netzwerkdienstserver der Port in der Netzzugangseinrichtung freischaltbar ist, der für die zweite Kommunikationsverbindung zur Erfassungseinrichtung verwendbar ist.

17. Netzwerkzugangseinrichtung nach dem vorhergehenden Anspruch, **dadurch gekennzeichnet, dass** der Port in Abhängigkeit von der ersten Kommunikationsverbindung freischaltbar ist.

18. Netzwerkzugangseinrichtung nach dem vorhergehenden Anspruch 16 oder 17, **dadurch gekennzeichnet, dass** der freizuschaltende Port vorkonfiguriert ist oder dynamisch aus den genannten Netzwerkzugangskonfigurationsdaten ermittelbar ist.

19. Netzwerkanordnung (EV, EVSE, tz1) mit mindestens einer Erfassungseinrichtung nach einem der vorhergehenden Ansprüche 11 bis 12 und mindestens einer Netzwerkzugangseinrichtung nach einem der vorhergehenden Ansprüche 13 bis 18, an welche die Erfassungseinrichtungen koppelbar sind, wobei die Erfassungseinrichtung und Netzwerkzugangseinrichtung dazu ausgelegt sind, ein Verfahren nach einem der vorhergehenden Verfahrensansprüche durchzuführen.

20. Netzwerkanordnung nach dem vorhergehenden Anspruch, **dadurch gekennzeichnet, dass** die zweite Kommunikationsverbindung an die erste Kommunikationsverbindung gebunden ist.

21. Netzwerkanordnung nach einem der vorhergehenden Ansprüche 19 oder 20, **dadurch gekennzeichnet**, die Beendigung der zweiten Kommunikationsverbindung abhängig ist von der Beendigung der ersten Kommunikationsverbindung.

22. Netzwerkanordnung nach einem der vorhergehenden Ansprüche 19 bis 21, **dadurch gekennzeichnet, dass** die erzeugten und/oder festgelegten Netzwerkzugangskonfigurationsdaten einen öffentlichen oder versteckten Netzwerknamen und/oder einen Zugangsschlüssel umfassen.

23. Computerprogrammprodukt mit mindestens einem Computerprogramm, das Mittel zur Durchführung des Verfahrens nach einem der vorstehenden Verfahrensansprüche aufweist, wenn das mindestens ein Computerprogramm verteilt innerhalb der Netzwerkanordnung nach einem der vorstehenden Netzwerkanordnungsansprüche zur Ausführung gebracht wird.

## Claims

1. Method for providing at least one service within a network arrangement having:
- one or more capture devices (EV) and having
- one or more network access devices (EVSE) to which one or more capture devices (EV) can be respectively coupled; having the following steps of:
- providing a security association having cryptographic protection on or above the transport level of the communication protocol levels, which can be used in the network arrangement, for at least one first existing communication connection between one of the capture devices (EV) and one of the network access devices (EVSE), wherein the first communication connection is used to monitor data captured by the capture device and/or to control a further device within the network arrangement on the basis of the data captured by the capture device (1),
- generating and/or determining network access configuration data for at least one further, second communication connection, which is to be cryptographically protected below the transport level, between the capture device and the network access device,
- providing the network access device with the generated and/or determined network access configuration data using the security association provided for the first communication connection (3), wherein the generated and/or determined network access configuration data are provided by deriving them from the context of said first cryptographically protected communication connection,
- setting up at least network access intended for the at least one further, second communication connection in the network access device with the aid of these provided network access configuration data,
- establishing said at least one further, second communication connection between the capture device (EV) and the further network access which has been set up in the network access device (EVSE) with the aid of the generated and/or determined network access configuration data, wherein one or more services can be provided via this further, second communication connection of the capture device (5).

2. Method according to the preceding claim, **characterized in that** said cryptographic protection for the first communication connection is implemented by means of so-called TLS encryption or DTLS encryption.

3. Method according to one of the preceding claims, **characterized in that** the second communication connection is bound to the first communication connection.

4. Method according to one of the preceding claims, **characterized in that** the second communication connection is terminated when the first communication connection is terminated.

5. Method according to one of the preceding claims, **characterized in that** the generated and/or determined network access configuration data comprise a public or hidden network name and/or an access key.

6. Method according to one of the preceding claims, **characterized in that** the further network access which has been set up is temporally limited and is no longer available after the time at which the first communication connection is terminated.

7. Method according to one of the preceding claims, **characterized in that** the one or more network access devices permit a communication connection from the network access device to a network service server (tz1) (4) so that one or more of said services are provided by the network service server.

8. Method according to the preceding claim, **characterized in that** that port in the network access device which is used for the second communication connection to the capture device is enabled for this communication connection to the network service server.

9. Method according to the preceding claim, **characterized in that** the port is enabled on the basis of the first communication connection.

10. Method according to the preceding Claim 8 or 9, **characterized in that** the port to be enabled is preconfigured or is dynamically determined from said network access configuration data.

11. Capture device (EV) suitable for receiving a service within a network arrangement, having:
- means for providing a security association having cryptographic protection on or above the transport level of the communication protocol levels, which can be used in the network arrangement, for at least one first existing communication connection between the capture device (EV) and a network access device (EVSE) arranged in the network arrangement, wherein the first communication connection can be used to monitor data captured by the capture device and/or to control a further device within the network arrangement on the basis of the data captured by the capture device,
- means for generating and/or determining network access configuration data for at least one further, second communication connection, which is to be cryptographically protected below the transport level, between the capture device and the network access device,
- means for providing the network access device with the generated and/or determined network access configuration data using the security association provided for the first communication connection, wherein the generated and/or determined network access configuration data are provided by deriving them from the context of said first cryptographically protected communication connection,
- means for establishing the at least further, second communication connection between the capture device and further network access which has been set up in the network access device with the aid of the generated and/or determined network access configuration data, wherein one or more services can be provided via this further, second communication connection of the capture device.

12. Capture device according to the preceding claim, **characterized in that** said cryptographic protection for the first communication connection can be implemented by means of so-called TLS encryption or DTLS encryption.

13. Network access device (EVSE) suitable for providing a service for a capture device (EV) within a network arrangement, having:
- means for using generated and/or determined network access configuration data to establish at least one second communication connection, which data have been provided using the security association having cryptographic protection provided for at least one first communication connection on or above the transport level of the communication protocol levels which can be used in the network arrangement, wherein the at least first communication connection can be used to monitor data captured by the capture device and/or to control a further device within the network arrangement on the basis of the data captured by the capture device, wherein the generated and/or determined network access configuration data have been provided by deriving them from the context of said first cryptographically protected communication connection,
- means for setting up at least further network access with the aid of these provided network access configuration data,
- means for establishing the at least further, second communication connection between the capture device and the further network access which has been set up with the aid of the provided network access configuration data, wherein one or more services can be provided via this further, second communication connection of the capture device.

14. Network access device according to the preceding claim, **characterized in that** the further network access which has been set up is temporally limited and is no longer available after the time at which the first communication connection is terminated.

15. Network access device according to the preceding Claim 13 or 14, **characterized in that** it allows a communication connection to a network service server so that one or more of said services can be provided by the network service server.

16. Network access device according to the preceding claim, **characterized in that** that port in the network access device which can be used for the second communication connection to the capture device can be enabled for this communication connection to the network service server.

17. Network access device according to the preceding claim, **characterized in that** the port can be enabled on the basis of the first communication connection.

18. Network access device according to the preceding Claim 16 or 17, **characterized in that** the port to be enabled is preconfigured or can be dynamically determined from said network access configuration data.

19. Network arrangement (EV, EVSE, tz1) having at least one capture device according to either of the preceding Claims 11 and 12 and at least one network access device according to one of the preceding Claims 13 to 18, to which the capture devices can be coupled, wherein the capture device and the network access device are designed to carry out a method according to one of the preceding method claims.

20. Network arrangement according to the preceding claim, **characterized in that** the second communication connection is bound to the first communication connection.

21. Network arrangement according to either of the preceding Claims 19 and 20, **characterized in that** the termination of the second communication connection is dependent on the termination of the first communication connection.

22. Network arrangement according to one of the preceding Claims 19 to 21, **characterized in that** the generated and/or determined network access configuration data comprise a public or hidden network name and/or an access key.

23. Computer program product having at least one computer program which has means for carrying out the method according to one of the preceding method claims when the at least one computer program is executed in a distributed manner within the network arrangement according to one of the preceding network arrangement claims.

## Revendications

1. Procédé de fourniture d'au moins un service dans un système de réseau, comprenant :
- un ou plusieurs dispositifs de détection (EV) et avec
- un ou plusieurs dispositifs d'accès réseau (EVSE) auxquels peuvent être couplés respectivement un ou plusieurs dispositifs de détection (EV) ; comportant les étapes suivantes :
- fourniture d'une association de sécurité avec protection cryptographique sur ou au-dessus du niveau de transport des niveaux de protocole de communication applicables dans le système de réseau pour au moins une première liaison de communication existante entre l'un des dispositifs de détection (EV) et l'un des dispositifs d'accès réseau (EVSE), la première liaison de communication étant utilisée pour surveiller des données détectées par le dispositif de détection et/ou commander un autre dispositif dans le système de réseau à l'aide des données détectées par le dispositif de détection (1),
- génération et/ou détermination de données de configuration d'accès réseau pour au moins une autre deuxième liaison de communication à protéger cryptographiquement en dessous du niveau de transport entre le dispositif de détection et le dispositif d'accès réseau,
- fourniture des données de configuration d'accès réseau générées et/ou déterminées au niveau du dispositif d'accès réseau en utilisant l'association de sécurité fournie (3) pour la première liaison de communication, les données de configuration d'accès réseau générées et/ou déterminées étant fournies par dérivation à partir du contexte de ladite première liaison de communication protégée cryptographiquement,
- aménagement d'au moins un accès réseau destiné à l'au moins une autre deuxième liaison de communication dans le dispositif d'accès réseau à l'aide de ces données de configuration d'accès réseau fournies,
- établissement de ladite au moins une autre deuxième liaison de communication entre le dispositif de détection (EV) et l'autre accès réseau aménagé dans le dispositif d'accès réseau (EVSE) à l'aide des données de configuration d'accès réseau générées et/ou déterminées, un ou plusieurs services pouvant être fournis au dispositif de détection via cette autre deuxième liaison de communication (5).

2. Procédé selon la revendication précédente, **caractérisé en ce que** ladite protection cryptographique pour la première liaison de communication est réalisée par ce qu'il est convenu d'appeler un cryptage TLS ou cryptage DTLS.

3. Procédé selon l'une des revendications précédentes, **caractérisé en ce que** la deuxième liaison de communication est liée à la première liaison de communication.

4. Procédé selon l'une des revendications précédentes, **caractérisé en ce qu'**il est mis fin à la deuxième liaison de communication lorsqu'il est mis fin à la première liaison de communication.

5. Procédé selon l'une des revendications précédentes, **caractérisé en ce que** les données de configuration d'accès réseau générées et/ou déterminées comprennent un nom de réseau public ou caché et/ou une clé d'accès.

6. Procédé selon l'une des revendications précédentes, **caractérisé en ce que** l'autre accès réseau aménagé est limité dans le temps et n'est plus disponible après l'instant où il est mis fin à la première liaison de communication.

7. Procédé selon l'une des revendications précédentes, **caractérisé en ce que** l'un ou les plusieurs dispositif d'accès réseau autorisent une liaison de communication (4) du dispositif d'accès réseau vers un serveur de services réseau (tz1) afin qu'un ou plusieurs desdits services soient fournis par le serveur de services réseau.

8. Procédé selon la revendication précédente, **caractérisé en ce que**, pour cette liaison de communication vers le serveur de services réseau, le port qui est utilisé pour la deuxième liaison de communication vers le dispositif de détection est débloqué dans le dispositif d'accès réseau.

9. Procédé selon la revendication précédente, **caractérisé en ce que** le port est débloqué en fonction de la première liaison de communication.

10. Procédé selon la revendication précédente 8 ou 9, **caractérisé en ce que** le port à débloquer est préconfiguré ou est déterminé dynamiquement à partir desdites données de configuration d'accès réseau.

11. Dispositif de détection (EV) adapté pour recevoir un service dans un système de réseau, comportant :
- des moyens pour fournir une association de sécurité avec protection cryptographique sur ou au-dessus du niveau de transport des niveaux de protocole de communication applicables dans le système de réseau pour au moins une première liaison de communication existante entre le dispositif de détection (EV) et un dispositif d'accès réseau (EVSE) agencé dans le système de réseau, la première liaison de communication pouvant être utilisée pour surveiller des données détectées par le dispositif de détection et/ou commander un autre dispositif dans le système de réseau à l'aide des données détectées par le dispositif de détection,
- des moyens pour générer et/ou déterminer des données de configuration d'accès réseau pour au moins une autre deuxième liaison de communication à protéger cryptographiquement en dessous du niveau de transport entre le dispositif de détection et le dispositif d'accès réseau,
- des moyens pour fournir des données de configuration d'accès réseau générées et/ou déterminées au niveau du dispositif d'accès réseau en utilisant l'association de sécurité fournie pour la première liaison de communication, les données de configuration d'accès réseau générées et/ou déterminées étant fournies par dérivation à partir du contexte de ladite première liaison de communication protégée cryptographiquement,
- des moyens pour établir l'une au moins autre deuxième liaison de communication entre le dispositif de détection et un autre accès réseau aménagé dans le dispositif d'accès réseau à l'aide des données de configuration d'accès réseau générées et/ou déterminées, un ou plusieurs services pouvant être fournis au dispositif de détection via cette autre deuxième liaison de communication.

12. Dispositif de détection selon la revendication précédente, **caractérisé en ce que** ladite protection cryptographique pour la première liaison de communication peut être réalisée par ce qu'il est convenu d'appeler un cryptage TLS ou un cryptage DTLS.

13. Dispositif d'accès réseau (EVSE) adapté pour fournir un service pour un dispositif de détection (EV) dans un système de réseau, comportant :
- des moyens pour utiliser des données de configuration d'accès réseau générées et/ou déterminées pour établir au moins une deuxième liaison de communication, lesquelles ont été fournies en utilisant l'association de sécurité, fournie pour au moins une première liaison de communication, avec protection cryptographique sur ou au-dessus du niveau de transport des niveaux de protocole de communication applicables dans le système de réseau, l'au moins première liaison de communication pouvant être utilisée pour surveiller des données détectées par le dispositif de détection et/ou commander un autre dispositif dans le système de réseau à l'aide des données détectées par le dispositif de détection, les données de configuration d'accès réseau générées et/ou déterminées ayant été fournies par dérivation à partir du contexte de ladite première liaison de communication protégée cryptographiquement,
- des moyens pour aménager au moins un autre accès réseau à l'aide de ces données de configuration d'accès réseau fournies,
- des moyens pour établir l'une au moins autre deuxième liaison de communication entre le dispositif de détection et l'autre accès réseau aménagé à l'aide des données de configuration d'accès réseau fournies, un ou plusieurs services pouvant être fournis au dispositif de détection via cette autre deuxième liaison de communication.

14. Dispositif d'accès réseau selon la revendication précédente, **caractérisé en ce que** l'autre accès réseau aménagé est limité dans le temps et n'est plus disponible après l'instant où la première liaison de communication est terminée.

15. Dispositif d'accès réseau selon la revendication précédente 13 ou 14, **caractérisé en ce qu'**il autorise une liaison de communication vers un serveur de services réseau afin qu'un ou plusieurs desdits services puissent être fournis par le serveur de services réseau.

16. Dispositif d'accès réseau selon la revendication précédente, **caractérisé en ce que**, pour cette liaison de communication vers le serveur de services réseau, le port qui peut être utilisé pour la deuxième liaison de communication vers le dispositif de détection peut être débloqué dans le dispositif d'accès réseau.

17. Dispositif d'accès réseau selon la revendication précédente, **caractérisé en ce que** le port peut être débloqué en fonction de la première liaison de communication.

18. Dispositif d'accès réseau selon la revendication précédente 16 ou 17, **caractérisé en ce que** le port à débloquer est préconfiguré ou peut être déterminé dynamiquement à partir desdites données de configuration d'accès réseau.

19. Système de réseau (EV, EVSE, tz1) avec au moins un dispositif de détection selon l'une des revendications précédentes 11 à 12 et au moins un dispositif d'accès réseau selon l'une des revendications précédentes 13 à 18, auquel les dispositifs de détection peuvent être couplés, le dispositif de détection et le dispositif d'accès réseau étant conçus pour exécuter un procédé selon l'une des revendications de procédé précédentes.

20. Système de réseau selon la revendication précédente, **caractérisé en ce que** la deuxième liaison de communication est liée à la première liaison de communication.

21. Système de réseau selon l'une des revendications précédentes 19 ou 20, **caractérisé en ce que** la terminaison de la deuxième liaison de communication est fonction de la terminaison de la première liaison de communication.

22. Système de réseau selon l'une des revendications précédentes 19 à 21, **caractérisé en ce que** les données de configuration d'accès réseau générées et/ou déterminées comprennent un nom de réseau public ou caché et/ou une clé d'accès.

23. Produit de programme informatique avec au moins un programme informatique qui comporte des moyens pour exécuter le procédé selon une des revendications de procédé précédentes lorsque l'au moins un programme informatique est mis à exécution de manière distribuée dans le système de réseau selon une des revendications de système de réseau précédentes.
